# EUROPÄISCHE PATENTSCHRIFT

(11) **EP 4 217 990 B1**
(45) Veröffentlichungstag und Bekanntmachung des Hinweises auf die Patenterteilung: **14.08.2024**
(21) Anmeldenummer: 21782728.6
(22) Anmeldetag: 23.09.2021
(51) Int. Cl.: G09B 9/00, G09B 19/00, F41A 17/08, F41A 33/00

(54) **GEFECHTSTRAININGSYSTEM**
COMBAT TRAINING SYSTEM
SYSTÈME D'ENTRAÎNEMENT AU COMBAT

(30) Priorität: 24.09.2020 EP 20198191
(43) Veröffentlichungstag der Anmeldung: 02.08.2023
(73) Patentinhaber: Fraunhofer-Gesellschaft zur Förderung der angewandten Forschung e.V., 80686 München (DE)
(72) Erfinder: HEß, Sebastian, 79104 Freiburg (DE); NOTHDURFT, Sven, 79104 Freiburg (DE); NAU, Siegfried, 79104 Freiburg (DE); KUSCHKE, Eckhard, 79104 Freiburg (DE)
(74) Vertreter: Rösler, Uwe
(86) Internationale Anmeldenummer: PCT/EP2021/076223
(87) Internationale Veröffentlichungsnummer: WO 2022/063909

(56) Entgegenhaltungen:
- WO-A1-2013/160445
- WO-A2-2011/037661
- WO-A2-2017/184230

## Beschreibung

### Technisches Gebiet

Die Erfindung bezieht sich auf ein Gefechtstrainingssystem zur überwachten Durchführung von Schießübungen und/oder Gefechtsszenarien.

### Stand der Technik

Die Durchführung von Schießübungen an zivilen oder militärischen Standortschießanlagen sowie auch die Durchführung von Gefechtsszenarien auf militärischen Truppenübungsplätzen unterliegen hohen Sicherheitsstandards um primär die Verletzungsgefahr für alle mittel- oder unmittelbar an den Schießübungen beteiligten Personen zu minimieren und Materialschäden an Objekten in der Umgebung möglichst zu vermeiden. Zur Gewährleistung der Schießsicherheit beim Umgang mit Schusswaffen auf militärischen Truppenübungsplätzen werden ausgewiesene Gefahrenbereiche festgelegt, die sowie auch die einzelnen Schützen durch Aufsichtspersonal überwacht und kontrolliert werden. Das Vorsehen räumlich fest und zeitlich dauerhaft oder übungsspezifisch vorgesehener Gefahrenbereiche auf Truppenübungsplätzen schränkt die Übungsmöglichkeiten jedoch sehr stark ein. Überdies ist die Überwachung von Schießübungen auf Truppenübungsplätzen sowie auch an Standortschießanlagen durch Aufsichtspersonal sehr aufwendig und verbleibt systembedingt überdies lückenhaft.

Soll beispielsweise auf einem Truppenübungsplatz eine Gefechtsübung mit Gefechtsmunition durchgeführt werden, so wird zunächst der angedachte Übungsverlauf, basierend auf einem Übungsziel, erarbeitet. Ein wichtiger Teil davon ist die Ermittlung von statischen Gefährdungs- bzw. Sicherheitsbereichen. Dies erfolgt größtenteils analog und stets vorab unter Zugrundelegung der Zentralrichtlinie-Schießsicherheit A2 2090.

Zur Treffererfassung und Kontrolle sind laserbasierte Systeme bekannt, die jeweils als Zusatzmodul an eine Schusswaffe montierbar sind. Derartige Laserpointersysteme ermöglichen eine optische sowie auch sensorische Zieltreffererfassung insbesondere bei Benutzung von Manövermunition, d.h. Platzpatronen.

Beim Üben mit scharfer Munition erfolgt die Trefferzuordnung zumindest bei sehr einfachen Schießübungen durch optische Beobachtung von Schütze und Ziel. In Fällen komplexerer Übungen, wie beispielsweise Gefechtsübungen, ist eine derartige optische Überwachung der Trefferzuordnung sehr schwer oder nicht möglich.

Eine zur Verwendung von Laserpointersystemen in Verbindung mit Schusswaffen sehr ähnliche Technologie ist in der Druckschrift EP 2 950 032 B1 beschrieben. Die Druckschrift offenbart eine Vorrichtung sowie ein Verfahren zur Verbesserung der Trefferwahrscheinlichkeit einer Schusswaffe bei dem in der Schusswaffe eine Erkennungseinheit zum Sammeln von Richtungsdaten enthalten ist, durch die die Richtung bzw. Orientierung der Schusswaffe erfassbar ist. Auf der Basis der so gewonnenen Richtungsdaten der Schusswaffe wird mit Hilfe eines Abschussprozessors und unter Berücksichtigung vorgegebener Schussgenehmigungszonen eine Schussfreigabe mit Hilfe eines die Funktion des Abzugstollens der Schusswaffe kontrollierenden Elektromagneten ermöglicht oder untersagt.

Die Druckschriften WO 2017/184230 A2 offenbart ein elektronisches Schusswaffensystem für tragbare Schusswaffen, das über Beschleunigungssensoren sowie ein Steuersystem verfügt, das den Standort sowie die Ausrichtung der Schusswaffe in Bezug auf einen Kampfraum ermittelt. Die so ermittelten Daten werden an ein Head-up-Displays des Benutzers sowie an ein Gruppen- und Bereichsnetz weitergeleitet. Durch die visuelle Darstellung der Daten kann der Benutzer virtuell die Flugbahn, den Auftreffpunkt und andere ballistische Daten, die den Zustand und die Leistung der Waffe für alle abgefeuerten Geschosse betreffen, darstellen.

Die Druckschrift WO 2013/160445 A1 beschreibt ein Verfahren zur dreidimensionalen Szenarienerfassung des Geschehens bei Trainingsübungen von Feuergefechten im Nahbereich bei dem mehrere bildgebende Systeme, wie Videokameras, Scanner oder dergleichen, zur Überwachung der Übungsgebiete installiert sind und eine Software aus sämtlichen Aufnahmen ein fotorealistisches 3D-Modell des Szenarios berechnet und aufzeichnet.

Die Druckschrift WO 2011/037661 A2 offenbart ein Gefechtstrainingssystem zur überwachten Durchführung von Schießübungen bzw. Gefechtsszenarien, das folgende Komponenten umfasst: Wenigstens zwei Komponenten, von denen die erste Komponente eine Schusswaffe und die zweite Komponente ein Zielobjekt sind. Eine Einrichtung zur Erfassung jeweils einer Positionsinformation der wenigstens zwei Komponenten sowie eine Informationsverarbeitungseinheit, wobei die wenigstens zwei Komponenten jeweils eine Uhr aufweisen, die untereinander zeitsynchronisiert sind und jeweils codierte Zeitsignale mit einer, die jeweiligen Komponenten individualisierende Komponentenerkennung erzeugen, und wobei an den wenigstens zwei Komponenten jeweils ein Ereignissensor vorgesehen ist.

### Darstellung der Erfindung

Der Erfindung liegt die Aufgabe zugrunde ein Gefechtstrainingssystem zur überwachten Durchführung von Schießübungen und/oder Gefechtsszenarien derart anzugeben, dass eine Erfassung und vorzugsweise Kontrolle sämtlicher bei einer Schießübung oder einem Gefechtstraining eingesetzter Schusswaffen, d. h. Rohrwaffen im allgemeinen Sinne und insbesondere Handfeuerwaffen, möglich sein sollen ohne dabei die Handhabung sowie auch Mobilität beim Umgang mit der jeweiligen Schusswaffe einzuschränken. Dies gilt insbesondere beim Einsatz einer Vielzahl von Schusswaffen in einem Gefechtsszenario, bei dem sich die Übenden weitgehend ohne Mobilitätsbeschränkungen sowie ohne oder geringstmöglichen Gefahrenbereichsrestriktionen im Gelände bewegen sollen. Optional soll es darüber hinaus möglich sein, einen kontrollierten Einfluss auf die Funktionsweise einzelner Schusswaffen zu nehmen. Unabhängig vom Einsatz von scharfer Munition oder Manövermunition, d.h. Platzpatronen, sollen die Erfassung und Kontrolle der einzelnen Schusswaffen sowie auch die Schusswaffen-spezifischen Trefferereignisse möglich sein.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung, insbesondere unter Bezugnahme auf die erläuterten Ausführungsbeispiele zu entnehmen.

Das Gefechtstrainingssystem umfasst zur überwachten Durchführung von Schießübungen und/oder Gefechtsszenarien wenigstens zwei Komponenten, von denen die erste Komponente eine Schusswaffe und die zweite Komponente ein Zielobjekt oder eine Schusswaffe sind.

Der Begriff "Schusswaffe" soll Rohrwaffen im Allgemeinen umfassen, die über einen Lauf bzw. ein Waffenrohr verfügen, aus dem Projektile bzw. Geschosse abgefeuert werden, die nach Austritt aus dem Waffenrohr einer rein ballistischen Flugbahn folgen. Insbesondere sind hierbei Kampffahrzeug gestützte Schusswaffen, vorzugsweise in Form von Panzerkanonen, aber insbesondere von Personen mitführbare Handfeuerwaffen gemeint. Rohrwaffen zeichnen sich vornehmlich dadurch aus, dass deren zugeordnete Waffenrohrlängserstreckung im Zeitpunkt der Schussauslösung die ballistische Schusstrajektorie des Projektils festlegt.

Das Gefechtstrainingssystem umfasst darüber hinaus eine Einrichtung zur Erfassung einer Positionsinformation für die wenigstens eine Schusswaffe sowie auch für das wenigstens eine Zielobjekt. Unter dem Begriff "Positionsinformation" ist eine präzise Ortsangabe relativ zu einem beliebig vorgebbaren Koordinatensystem zu verstehen, vorzugsweise unter Zugrundelegung des geographischen Koordinatensystems, in dem eine geographische Position durch die Angabe der geographischen Länge und Breite bestimmt ist.

Ferner ist eine Einrichtung zur Erfassung der räumlichen Ausrichtung zumindest der wenigstens einen Schusswaffe unter den wenigstens zwei Komponenten vorgesehen, die eine räumliche Ausrichtungsinformation zu generieren in der Lage ist. Die Einrichtung erfasst in diesem Zusammenhang die räumliche Orientierung der Waffenrohrlängserstreckung, vorzugsweise in Form eines dreidimensionalen Vektors bezogen auf das jeweils vorgegebene Koordinatensystem. Im Falle eines Zielobjektes, das nicht stationär und bewegungslos, sondern mobil ist, betrifft die räumliche Ausrichtung des Zielobjektes bspw. die Orientierung einer bevorzugten Trefferfläche.

Die Einrichtung zur Erfassung der Positions- sowie räumlichen Ausrichtungsinformation für die wenigstens eine Schusswaffe sowie die Einrichtung zur Erfassung der Positionsinformation für das wenigstens eine Zielobjekt sind als separate, vorzugsweise als integrale Bestandteile in den wenigstens zwei Komponenten ausgebildet und angeordnet oder in Form eines einzigen separaten Erfassungssystems realisierbar.

Die Einrichtung bzw. die Einrichtungen vermögen die Positionsinformationen aller Komponenten sowie die Ausrichtungsinformationen zumindest für alle Schusswaffen unter den Komponenten an eine zentrale Informationsverarbeitungseinheit zu übertragen, in der die Positions- und Ausrichtungsinformationen der erfassten Komponenten verarbeitbar und wenigstens in Form einer Ergebnisinformation transformierbar sind. Die Ergebnisinformation dient vorzugsweise einer weiteren Auswertung, Archivierung und/oder Darstellung zu Zwecken der Überwachung und Kontrolle des aktuellen Gefechtsszenarios.

Um zu gewährleisten, dass sämtliche Ereignisse sowohl seitens der wenigstens einen Schusswaffe, bspw. einer Schussabgabe, als auch seitens des wenigstens eines Zielobjektes, bspw. eines Zielobjekttreffers, fehlerfrei der jeweiligen Komponente, d.h. der Schusswaffe oder dem Zielobjekt, zuordenbar sind, weisen die wenigstens zwei Komponenten jeweils eine Uhr auf, die untereinander zeitsynchronisiert sind und jeweils codierte Zeitsignale mit einer die jeweilige Komponente individualisierenden Komponentenkennung erzeugen auf. Ferner ist an den wenigstens zwei Komponenten jeweils ein Ereignissensor angebracht, mit dem im Falle der Schusswaffe wenigstens ein Schussereignis und im Falle des Zielobjektes ein Trefferereignis sensorisch erfassbar sind. Zu jedem der sensorisch erfassbaren Ereignisse wird zeitaufgelöst im Rahmen der gemeinsamen Systemzeit, die durch die Zeitsynchronität unter den Uhren in allen Komponenten eingeprägt ist, ein mit einer Art Zeitstempel versehendes Ereigniszeitsignal erzeugt. So wird bei einer Schussabgabe das codierte Ereigniszeitsignal zusammen mit der jeweiligen Positions- sowie Ausrichtungsinformation der jeweiligen Schusswaffe an die Informationsverarbeitungseinheit zur weiteren Auswertung übertragen. In gleicher Weise wird bei einem am Zielobjekt stattfindenden Trefferereignis ein entsprechendes Treffer- und Zielobjekt-spezifisches, zeitcodiertes Ereignissignal erzeugt, das in gleicher Weise an die Informationsverarbeitungseinheit zur weiteren Auswertung übertragen wird.

Das lösungsgemäße Gefechtstrainingssystem dient zur Verbesserung der Sicherheit und des Übungserfolges bei der Durchführung von Schusswaffentrainings, bei dem sämtliche am Gefechtsszenario beteiligte, risikorelevante Komponenten orts- sowie auch zeitaufgelöst, d.h. unter Zugrundelegung eines einheitlichen räumlichen Koordinatensystems sowie einer einheitlichen Systemzeit erfasst, überwacht und/oder kontrolliert werden.

In einer bevorzugten Ausführungsform weist zumindest die wenigstens eine Schusswaffe sowie gegebenenfalls das wenigstens eine, vorzugsweise mobile, Zielobjekt eine Einrichtung zur Erfassung der Positionsinformation in Form eines integralen Bestandteils der Schusswaffe bzw. des Zielobjektes auf. Vorzugsweise eignet sich hierfür eine Einheit zum Empfang und zur Auswertung von satellitengestützten Positionssignalen, vorzugsweise für den Empfang von GPS-, GLONASS-, GALILLEO- und/oder BEIDOU-Signalen. Alternativ ist es denkbar, insbesondere bei der Durchführung von Indoor-Gefechtsübungen ein durch Raummarker o.ä. Referenzobjekte definiertes Weltkoordinatensystem zu etablieren, zu dem die Position und räumliche Ausrichtung bzw. Orientierung der jeweiligen Komponenten erfassbar sind.

In gleicher Weise ist die Einrichtung zur Erfassung der räumlichen Ausrichtungsinformation der wenigstens einen Schusswaffe und gegebenenfalls des wenigstens einen Zielobjektes als integraler Bestandteil der jeweiligen Komponente ausgebildet. Zur Erfassung der Ausrichtung bzw. räumlichen Orientierung von Schusswaffen und/oder von Zielobjekten eignen sich Sensorkomponenten der nachfolgenden Art: inertiale Messeinheit (IMU: Inertial Measurement Unit; vorzugsweise mit fester Referenz zur Schussrichtung und absolut georeferenziert oder extern relativ referenziert zu einem absoluten, georeferenzierten System); Magnetometer; Kamera, vorzugsweise mit automatisierter Bildauswertung zur Ziel- bzw. Objekterkennung; optischer Sensor, z.B. zur Erfassung von Helligkeit, Polarisation zur Richtungserkennung; Ultraschallwandler bzw. UWB Sensorik (Ultra-wideband-Sensorik), Bewegungsanalyse-Sensor (Motion Capture).

Zur Übertragung zumindest der jeweils erfassten Positions- und Ausrichtungsinformationen an die zentrale Informationsverarbeitungseinheit weist die wenigstens eine Schusswaffe und/oder das wenigstens eine Zielobjekt zusätzlich eine die sensorisch erfassten Informationen verarbeitende Einheit, vorzugsweise in Form einer mikroprozessorbasierten Recheneinheit, sowie eine mit dieser mittel- oder unmittelbar verbundene Kommunikationseinheit auf, über die die sensorisch erfassten Informationen an die Informationsverarbeitungseinheit übertragbar sind.

Vorzugsweise sind die Schusswaffen-seitig bzw. Zielobjekt-seitig vorgesehenen Kommunikationseinheiten als Sende- und Empfangseinheit ausgebildet. Auf diese Weise ist es zum einen möglich, dass mehrere Schusswaffen untereinander und/oder in Kommunikation mit den Zielobjekten gelangen können. Auf diese Weise ist die Realisierung eines verteilten Kommunikationssystems unter den Schusswaffen bzw. Zielobjekten realisierbar, das eine Echtzeitkommunikation zu ermöglichen vermag, beispielsweise auf Basis von Nahbereichsfunk-Technik. Alternativ zu einer in den Schusswaffen bzw. Zielobjekten integrierten Sensorik zur Erfassung der Positionsinformation sowie der räumlichen Ausrichtungsinformation oder in Kombination mit einer derartigen Sensorik bietet es sich an die Einrichtung zur Erfassung der Positionsinformation und/oder die Einrichtung zur Erfassung der räumlichen Ausrichtungsinformation als separates boden- wasser- und/oder luftgestütztes Fernüberwachungssystem (Remote Control) auszubilden. Mit Hilfe der Remote-Control-Technik, wenigstens zur Erfassung der Position und räumlichen Ausrichtung zumindest der Schusswaffen, sind grundsätzlich keine Modifikationen an den Komponenten, d.h. den Schusswaffen und/oder den Zielobjekten vorzunehmen. Als Remote-Control-Systemen eignen folgende Systeme: Radarsystem und/oder optisches Bild- und Mustererfassungssystem, Schallwellen- oder Ultraschallwellen basiertes, Entfernungs-auflösenden Detektionssystem (SODAR oder UWB), Lichtwellen-basiertes Entfernungs-auflösbares Detektionssystem nach dem LIDAR-Prinzip.

Zudem können Treffer an Zielobjekten mittels Akustik-, Körperschall- oder RADAR-Sensoren detektiert werden.

Das am, um und/oder über dem Übungsareal anzuordnende Remote-Control-System verfügt über eine echtzeitfähige Datenerfassungs- und Datenübermittlungseinheit, die in Kommunikation mit der zentralen Informationsverarbeitungseinheit steht. Als echtzeitfähige Datenübertragungssysteme mit einer ausreichend großen Bandbreite eignen sich drahtlos-Technologien wie WLAN, Bluetooth, LTE etc. sowie drahtgebundene-Technologien, z.B. RS-232, Ethernet oder USB.

Aber auch im Falle einer dezentralen Erfassung von Position und Ausrichtung bzw. Orientierung der wenigstens einen Schusswaffe unter den wenigstens zwei Komponenten ist zumindest eine zeitsynchrone Informationserfassung zumindest von Position und Ausrichtung aller an der Übung beteiligten relevanten Komponenten erforderlich. Hierzu ist eine präzise, d.h. wenigstens zeitgenau in der Größenordnung von Millisekunden, einheitliche, synchrone Zeitbasis für alle Komponenten erforderlich, um deren Positionen und Ausrichtungen zeitlich korreliert zu erfassen. Diese zeitliche Korrelation ist durch die Implementierung von hochgenauen, jeweils zeitlich synchronisierten Uhren realisierbar, von denen jeweils eine Uhr in jeder der relevanten Komponenten integriert ist. Alternativ oder in Kombination hierzu lässt sich die gemeinsame Zeitbasis auch aus dem Empfang des Zeitsignalanteils eines GNSS, d.h. Satellitennavigationssignal, ableiten.

Um zudem sämtliche an die Informationsverarbeitungseinheit übertragenen Informationen Komponenten-selektiv auswerten und letztlich unterscheidbar voneinander darstellen zu können, vermag jede Komponente bei der Übertragung zumindest der Positions- und Ausrichtungsinformationen vorzugsweise jeweils eine die jeweilige Komponente eindeutig individualisierende Indentifikationsnummer zur Verfügung zu stellen bzw. zu generieren und zu übertragen.

Eine weitere Ausführungsform sieht vor, dass wenigstens eine Schusswaffe eine Einheit zur Erfassung des Sicherungszustandes und Erzeugung einer Information über den Sicherungszustand der Schusswaffe besitzt. Die Erfassungseinheit vermag insbesondere den Entsicherungszustand der Schusswaffe, bei der die Schusswaffe durch Betätigung des Abzuges wenigstens einen Schuss abzugeben vermag, fehlerfrei zu detektieren. Synchron zur Übertragung von Positions- und Ausrichtungsinformationen kann auf diese Weise der Sicherungszustand der Waffe zusätzlich an die zentrale Informationsverarbeitungseinheit übermittelt werden, in der ein Gesamtlagebild über die Schießübung bzw. das Gefechtsszenario unter Beteiligung sämtlicher Schusswaffen in Echtzeit erstellbar ist.

In einer weiteren Ausführungsform sieht die wenigstens eine Schusswaffe zusätzlich zu den vorstehend erläuterten Einheiten zur Erfassung der Position, der räumlichen Orientierung sowie auch des Sicherungszustandes der Schusswaffe eine fernaktivierbare Schusswaffenblockadeeinrichtung vor, mit der es möglich ist, von Seiten der zentralen Informationsverarbeitungseinheit oder einer mit dieser in Kommunikation stehenden übergeordneten Kontrolleinheit eine Waffenverblockung von individuellen Schusswaffen fernausgelöst zu aktivieren. Diese Schusswaffenblockadeeinrichtung kann bei Handfeuerwaffen beispielsweise durch Integration in ein separates Übungsgriffstück erfolgen.

Um die Schussabgabe sowie auch ein Trefferereignis am Ort eines Zielobjektes exakt erfassen zu können, sieht die wenigstens eine Schusswaffe sowie das wenigstens eine Zielobjekt einen Ereignissensor vor, der vielgestaltig in Form eines der nachfolgenden Sensoren ausgebildet sein kann:
Beschleunigungssensor, akustischer Sensor, z.B. Mikrofon, Körperschallsensor, Deformationssensor, Berührungssensor, Bewegungsanalysesensor, z.B. Schlagbolzen-Bewegung an der Schusswaffe.

Um die Ereignisse sowie der Schussabgabe seitens der Schusswaffe als auch den Aufprall eines Projektils bzw. Geschosses am Zielobjekt oder einen Druckwellebegleiteten nahen Projektil- oder Geschossvorbeiflug am Ziel zeitlich exakt zu erfassen, sehen die Schusswaffe sowie das wenigstens eine Zielobjekt eine Uhr vor, die jeweils untereinander zeitsynchronisiert sind und jeweils mit einer die jeweilige Schusswaffe sowie das jeweilige Zielobjekt individualisierende Komponentenkennung kodierte Zeitsignale zu erzeugen in der Lage ist. Auf diese Weise ist es möglich, Zielobjekt-Trefferereignisse bestimmten Schusswaffen zuzuordnen und darüber hinaus die Abschusshistorie jeder einzelnen Schusswaffe mit zugehöriger Trefferquote für spätere Auswertungszwecke zu archivieren.

Nicht notwendigerweise ist es erforderlich das wenigstens eine Zielobjekt als reales Objekt auszubilden oder vorzuhalten. Vielmehr ist es möglich, Zielobjekte dem jeweiligen Schützen in virtueller Form optisch wahrnehmbar zu präsentieren, beispielsweise unter Zuhilfenahme einer VR-Brille, dreidimensionaler Projektionssysteme, bspw. in Form eines Hologramms oder von Sprühnebel-Projektionsbildern etc.. Durch die mittels digitaler Ressourcen generierte Zielobjektprojektion liegen die Position und Ausrichtung des jeweiligen Zielobjektes relativ zum Übenden als Systeminhärent bekannte Informationen vor, die in der Informationsverarbeitungseinheit zusammen mit den sensorisch erfassten Informationen seitens der jeweilige Schusswaffe verarbeitet werden können.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Grundstruktur eines lösungsgemäß ausgebildeten Gefechtstrainingssystems,
- Fig. 2: Komponentenanordnung zur Erfassung und Darstellung der Gesamtlage eines Gefechtsszenarios,
- Fig. 3: Komponentenanordnung zur Erfassung und Darstellung gemäß Figur 2 sowie mit flexiblen Gefährdungsbereichen,
- Fig. 4: Blockdiagramm zur Illustration flexibler Gefährdungsbereiche,
- Fig. 5: Komponenten zur Erfassung und Darstellung gemäß Figur 2 mit der Möglichkeit einer aktiven Waffenverblockung,
- Fig. 6: Blockdiagramm zur Darstellung einer integrativen Waffenverblockung,
- Fig. 7: Komponentendarstellung vergleichbar mit Figur 2 mit Erfassung und Darstellung simulierter Treffer,
- Fig. 8: Blockdiagramm zur Erfassung simulierter Treffer
- Fig. 9: Komponentendarstellung zur Erfassung und Auswertung gemäß Figur1 mit waffenspezifischer Trefferzuordnung,
- Fig. 10: Blockdiagramm zur Illustration waffen- und schützenspezifischer Trefferzuordnungen.
- Fig. 11: Komponentendarstellung gemäß Figur 6 mit Generierung virtueller Zielobjekte sowie
- Fig. 12: Blockdiagramm zur Bekämpfung virtueller Ziele.

### Wege zur Ausführung der Erfindung, gewerbliche Verwendbarkeit

Kern des lösungsgemäßen Gefechtstrainingssystems ist eine Sensorik, mit der es möglich ist, Ereignisse, wie z.B. die Abgabe eines Schusses, und die Position sowie auch die räumliche Ausrichtung bzw. Orientierung wenigstens einer am Gefechtsszenario beteiligten Schusswaffe zu erfassen und die Schusswaffen-spezifische Ereignis-, Positions- und Ausrichtungsinformation an eine zentrale Informationsverarbeitungseinheit zur weiteren Auswertung, Aufbereitung und Darstellung der Informationen zu übertragen.

Eine Beschreibung der hierzu erforderlichen Sensoren und weiteren Komponenten wird im Folgenden anhand verschiedener Anwendungsfälle erläutert. Diese betreffen im Einzelnen:
a. Erfassen und Darstellen der Gesamtlage, d.h. Position und Orientierung aller im Gefechtsszenario vorhandenen Schusswaffen und gegebenenfalls Zielobjekte bzw. Zieldarstellungsgeräten; Erfassen und Darstellen der Gefährdungsbereiche von entsicherten Schusswaffen
b. Ermittlung flexibler Gefährdungsbereiche
c. Verblockung von Schusswaffen in bestimmten Situationen
d. Erfassung simulierter Treffer auf Zielobjekten
e. Schusswaffen-spezifische Zuordnung von Treffern
f. Bekämpfung virtueller Zieleobjekte

Eine Möglichkeit zur Positions- und Lageerfassung einer Schusswaffe besteht in der Integration einer Sensorik, die vorzugsweise modulartig ausgebildet ist und in die Schusswaffe integriert sein kann. Handelt es sich um eine Handschusswaffe, z.B. Pistole oder Gewehr, so besteht eine Integrationsmöglichkeit der Sensorik innerhalb eines austauschbaren Griffstückes der Schusswaffe. Hierdurch ist eine flexible und mobile Nutzung möglich und die Schützen können ihre eigene Waffe für die Übung uneingeschränkt verwenden.

Die Sensorik umfasst vorzugsweise eine Reihe von Komponenten der nachfolgenden Art: Einheit zum Empfang und Auswertung von satellitengestützter Positionssignale, wie beispielsweise GPS-, GLONASS-, GALLILEO-, BEIDOU-Signale, inertiale Messeinheit (IMU: Inertial Measurement Unit), Magnetometer, integrierte Kamera, beispielsweise mit automatischer Bildauswertung zur Zielerkennung, optische Sensoren, beispielsweise Helligkeitssensor, Polarisationssensor zur Richtungserkennung, Ultraschallabstandssensoren, UWB-Positionssensor (Ultra-Wideband), Motion Capture, d.h. Bewegungsanalyse-Sensor. Neben den Sensoren umfasst die Sensorik die für den Betrieb der Sensoren erforderliche Komponenten, wie eine prozessorbasierte Signalaufnahme- und Signalverarbeitungslogik, eine Energieversorgungseinheit sowie eine Kommunikationseinheit zur Übertragung der sensorisch erfassten Informationen, d.h. wenigstens der Positions- und Ausrichtungsinformationen an eine zentrale Informationsverarbeitungseinheit.

Zudem ist Teil jeder Sensorik eine Uhr, die am Ort der Sensorik eine Systemzeit vorgibt, wobei jeweils die Uhren und damit die Systemzeiten sämtlicher Sensoriken in allen an der Schießübung beteiligten Komponenten, d.h. aller Schusswaffen und Zielobjekten, zeitsynchronisiert sind. Zusätzlich sind die Uhren in der Lage zeitsynchronisierte, codierte Zeitsignale zu erzeugen, durch die jede einzelne Komponente, Komponenten-spezifisch identifizierbar sind. Hierzu sieht die Codierung eine die jeweilige Komponente individualisierende Komponentenkennung vor.

Zusätzlich zu der die Positions- und Lageinformation der jeweiligen Komponente erfassenden Sensorik, wie vorstehend erläutert, verfügen die wenigstens eine Schusswaffe sowie das wenigstens eine Zielobjekt jeweils über einen Ereignissensor, der im Falle der Schusswaffe in der Lage ist ein Schussereignis und im Falle des Zielobjektes ein Trefferereignis zu erfassen. Vorzugsweise eignen sich hierzu wenigstens einer der nachfolgenden Sensoren: Beschleunigungssensor, akustischer Sensor, Körperschallsensor, Deformationssensor, Berührungssensor.

So vermag jeweils der Ereignissensor die in der entsprechenden Komponente angeordnete Uhr zur Erzeugung eines codierten Zeitsignals zu triggern, um auf diese Weise das detektierte Ereignis (Schussabgabe bzw. Tefferereignis) mit einem zeitlich präzisen Zeitstempel zu versehen und mit den Informationen über den Ort und Ausrichtung der Schusswaffe bzw. des Zielobjektes zur Auswertung dem Informationsverarbeitungseinheit zuzuführen.

Durch die zeitliche Korrelation von Schuss- und Trefferereignis können auf die Weise im Rahmen der Informationsauswertung eine exakte Schütze-Ziel-Zuordnung vorgenommen werden. Zudem ermöglicht eine in Echtzeit durchführbare Erfassung von Ereignissen und deren Informationsweiterleitung an die Informationsverarbeitungseinheit eine dynamische Lage- und Gefährdungsbeurteilung insitu, d.h. während der im Gefechtsfeld stattfindenden Übungen.

Alle vorstehenden Komponenten können, wie bereits erwähnt, in einem einheitlichen Modul in oder an der Waffe integriert bzw. adaptiert sein. Gleichfalls ist es möglich, einige der vorstehenden Komponenten an portable Ausrüstungsgegenstände, die der Schütze mitführt, beispielsweise Uniform, Rucksack, Kopfbedeckung etc., anzuordnen.

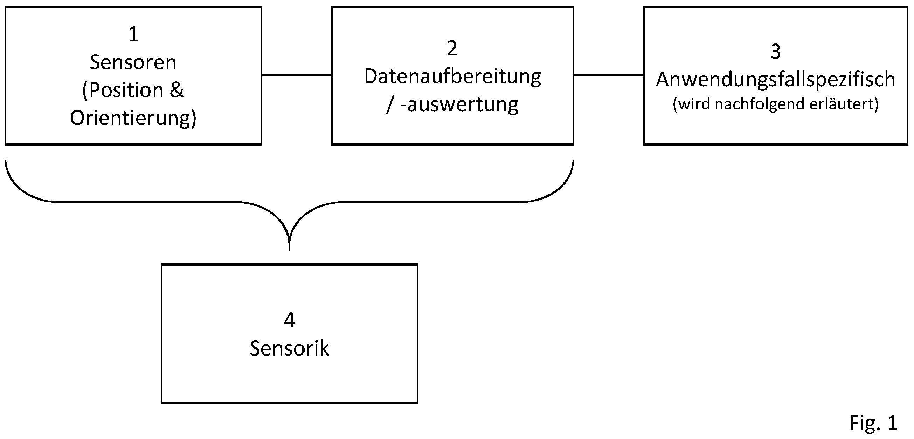

Zur Illustration eines einfachsten Ausführungsbeispiels für die Realisierung eines Gefechtstrainingssystems sei auf Figur 1 verwiesen, in der die wesentlichen Komponenten als Blockbild illustriert sind. Vorzugsweise in der Schusswaffe integrierte Sensoren 1 dienen zur Ereignis-, Positions- und Ausrichtungserfassung bzw. Erfassung der Orientierung der Schusswaffe, um die Schussabgabe und um die Richtung, in die die Schussabgabe erfolgt, erfassen bzw. bestimmen zu können. Die mit Hilfe der Sensoren erzeugten Sensorsignale werden einer nachfolgenden Datenaufbereitung 2 unterzogen, bei der die Sensorsignale zur Übertragung an eine externe Informationsverarbeitungseinheit 3 aufbereitet und mit einem die jeweilige Schusswaffe individualisierenden, codierten Zeitsignal versehen werden. Die Sensoren 1 sowie auch die Datenaufbereitung 2 bilden die Sensorik 4, die entweder modulartig als Baueinheit in oder an einer Schusswaffe integriert ist oder in Form eines verteilten Systems mit untereinander kommunizierenden Komponenten, beispielsweise unter Nutzung echtzeitfähiger Nahbereichsfunk-Kommunikation, unmittelbar an der Schusswaffe sowie an Teilen der Ausrüstung des Schützen angebracht sein können.

Alternativ oder in Kombination mit einer direkt an der Schusswaffe angebrachten Sensorik 4 bietet es sich an, die Sensorik in der Umgebung, d.h. als boden-, wasser- und/oder luftgestütztes Fernüberwachungssystem zu installieren. Hierzu eignen sich vorzugsweise wenigstens eines der nachfolgenden Systeme: Radarsystem, optisches Bild- und Mustererfassungssystem, Ultraschallwellen-basiertes entfernungsauflösbares Detektionssystem (Sodar) sowie Lichtwellen-basiertes, entfernungsauflösbares Detektionssystem (Lidar).

Um die Detektierbarkeit der wenigstens einen Schusswaffe für eines der vorstehend genannten Remote-Control-Systems zu verbessern, eignen sich an der Schusswaffe anbringbare Marker, um deren Position sowie auch räumliche Orientierung fehlerfrei detektieren zu können. Auch in diesem Fall wird jedes Ereignis an einer Schusswaffe sowie an einem Zielobjekt, zeitaufgelöst unter Zugrundelegung einer gemeinsamen Systemzeit erfasst.

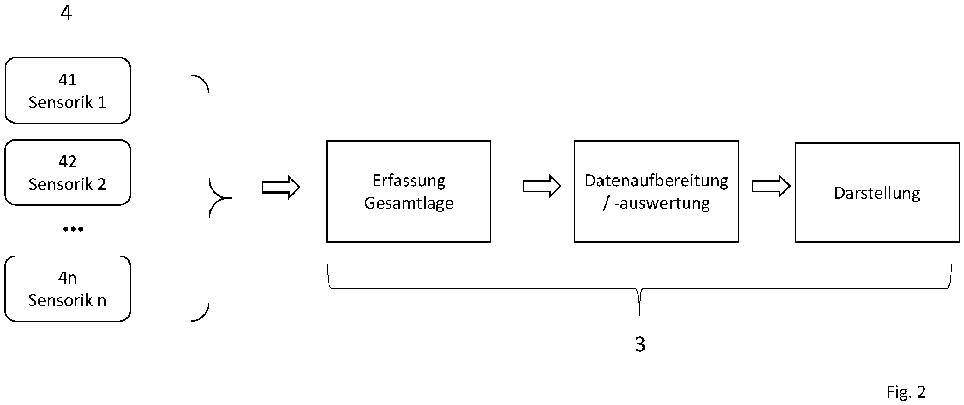

In Figur 2 ist ein Szenario illustriert, das eine Vielzahl n von Schusswaffen bzw. Schützen mit Schusswaffen illustriert. Jede einzelne Schusswaffe verfügt über eine Sensorik 4₁, 4₂, ... 4ₙ. Die mit jeder der n Sensoriken 4 erfassten Ereignis-, Positionssowie Ausrichtungsinformationen werden zeitaufgelöst an die zentrale Informationsverarbeitungseinheit 3 übertragen, in der ein Gesamtlagebild über die aktuelle Gefechtssituation erfasst, im Rahmen einer Datenaufbereitung aufbereitet und zur Darstellung gebracht wird. Dabei werden sämtliche Schusswaffen-spezifische Ereignis-, Orts- und Ausrichtungsinformationen zusammengeführt, wobei deren absolute Positionen unter Echtzeitbedingungen in einem einheitlichen Koordinatensystem zu Auswerte- und/oder Darstellungszwecken zusammengefasst werden. Die Möglichkeit neben der Position auch die Ausrichtung aller Schusswaffen in Echtzeit zu erfassen und darzustellen, beispielsweise auf einem Monitor oder mittels eines Lichtprojektionssystems, führt zu einem erheblichen Mehrwert für die Schießsicherheit im Übungsbetrieb.

Die Informationsverarbeitungseinheit verfügt zudem über eine Kommunikationseinheit, über die auf Basis der durchgeführten Datenaufbereitung und Auswertung ein detailliertes Feedback an alle beteiligten Schützen übertragen werden kann, wodurch eine deutliche Steigerung der Ausbildungsqualität die Folge ist.

In Ergänzung zur waffengestützten Sensorik zur Erfassung von Position und räumlicher Orientierung sieht die wenigstens eine Schusswaffe eine Einheit zur Erfassung des Sicherungszustandes sowie zur Erzeugung einer Information über den Sicherungszustand der Schusswaffe vor. Über eine schusswaffenseitige Kommunikationseinheit werden die Informationen über den Sicherungszustand an die zentrale Informationsverarbeitungseinheit 3 übertragen und gemeinsam mit den jeweiligen Positionen und Orientierungen der Schusswaffen ausgewertet und dargestellt.

Überdies ermöglicht die Kenntnis über die Positionen, Orientierungen und den Sicherungszustand aller an einer Schießübung beteiligten Schusswaffen die Möglichkeit Gefährdungsbereiche innerhalb eines Gefechtsszenarios in Verbindung mit den Positionen der die Schusswaffen tragenden Übungsbeteiligten in Echtzeit zu verknüpfen und darzustellen. Auf diese Weise ist es möglich, während einer Übung zu jedem Zeitpunkt zu überprüfen, ob sich Übungsbeteiligte in einem Gefährdungsbereich befinden (innere Schießsicherheit) oder Bereichs- bzw. Platzgrenzen überschreiten (äußere Schießsicherheit). Dadurch kann flexibel und schnell auf Schießsicherheitsereignisse reagiert werden, z.B. durch Übungsabbruch, durch Information der Schießsicherheitsdienstgrade oder eine direkte, z.B. durch ein Teilnehmer-spezifisches Signalgerät bzw. zentrale, z.B. schießbahnweit erfassbare Anzeige. Die Auswertung und Entscheidungsfindung kann in diesem Fall manuell, z.B. durch einen Schießsicherheitsdienstgrad, oder teilautomatisiert, beispielsweise auf Grundlage eines Software-basierter Handlungsvorschlages, oder vollautomatisiert erfolgen. Des Weiteren ermöglicht die Erfassung der Waffenorientierung eine Dynamisierung sämtlicher Gefährdungsbereiche, indem beispielsweise die Länge des Gefährdungsbereiches abhängig von der Elevation einer Schusswaffe angepasst werden kann.

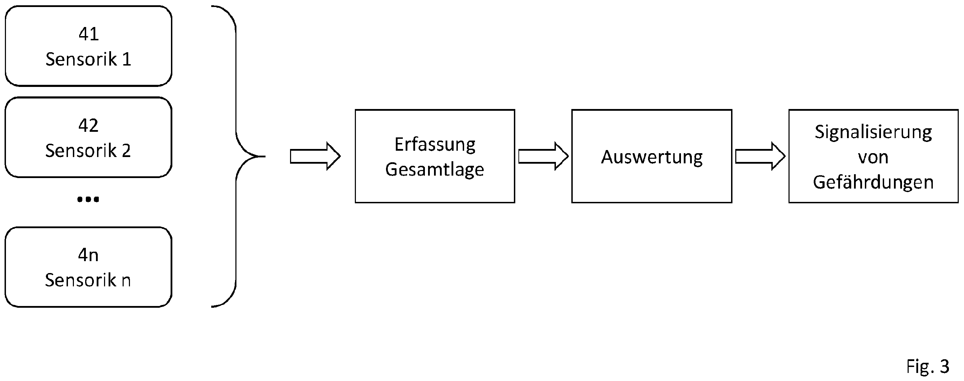

Figur 3 zeigt ein derartiges Einsatzszenario, bei der n-Schusswaffen jeweils mit einer Sensorik 4₁, 4₂, ..., 4ₙ ausgestattet sind. Gleichsam wie im der in Figur 2 gezeigten Fall dienen Position und Orientierung der Schusswaffe im Raum sowie auch deren Sicherungszustand zur Erfassung der Gesamtlage einer abgehaltenen Schießübung. In Verbindung mit den sich aus ZDV A2 2090 ergebenden Gefährdungsbereichen kann mittels einer Datenauswertung die Signalisierung von Gefährdungen vorgenommen werden, die über geeignete Anzeige- bzw. Mitteilungsmittel für alle Übenden wahrnehmbar signalisiert werden kann.

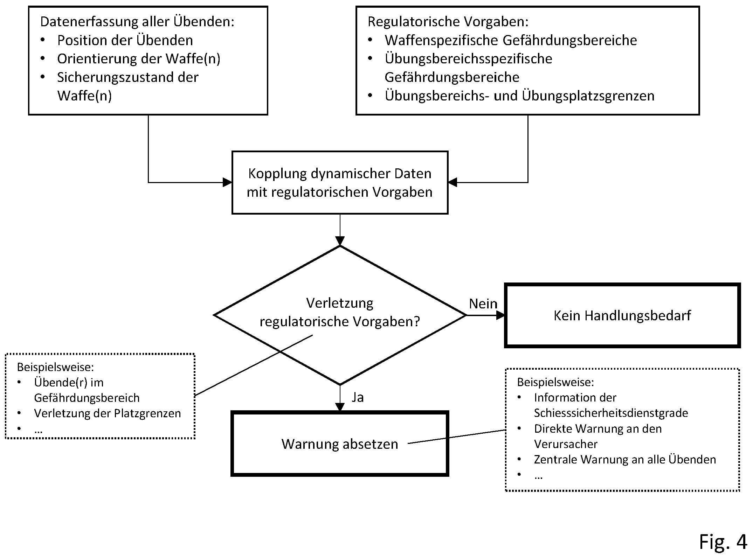

Figur 4 zeigt in diesem Zusammenhang ein Blockdiagramm zur Illustration flexibler Gefährdungsbereiche bei jeweils unterschiedlichen Entscheidungslagen.

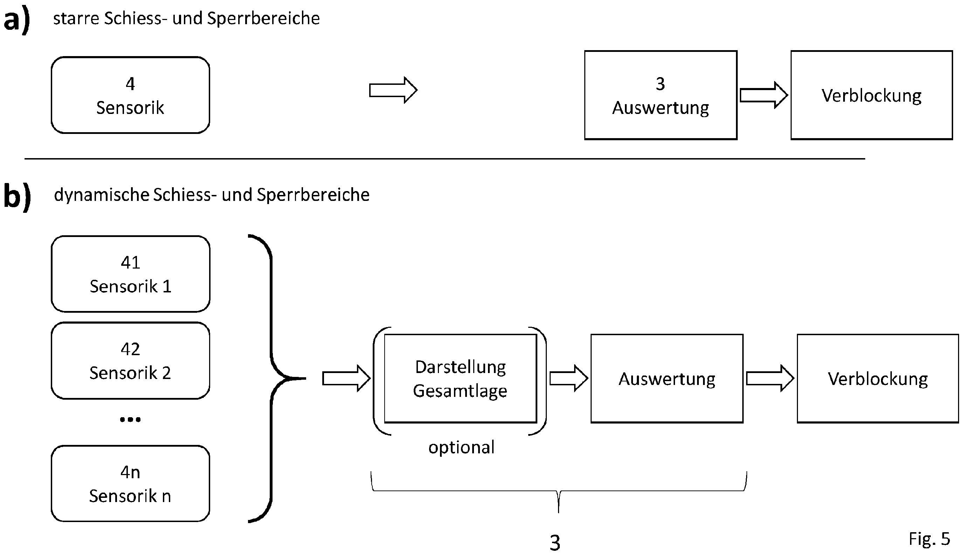

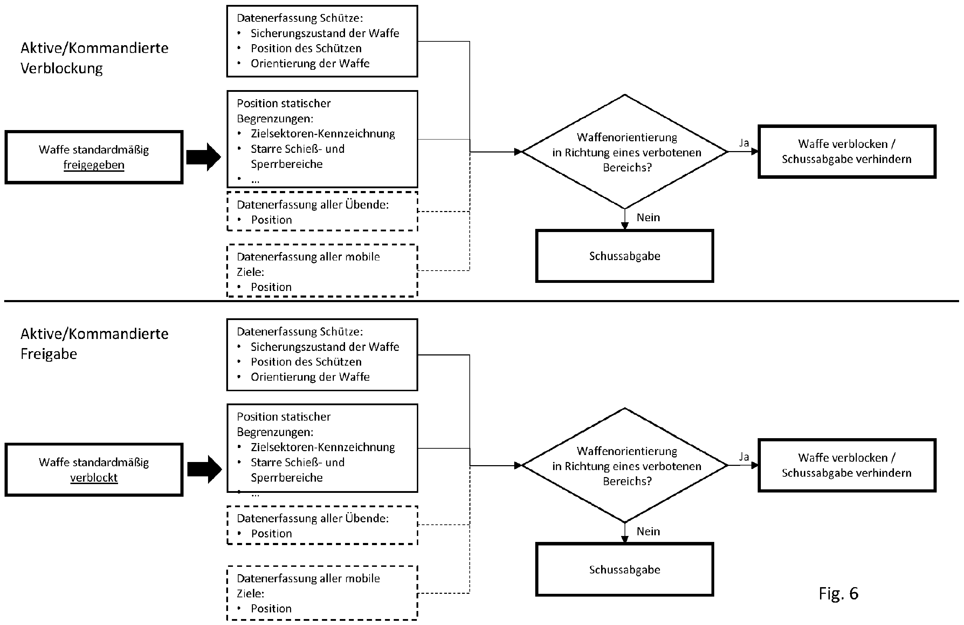

In einem weiteren bevorzugten Ausführungsbeispiel sehen die Schusswaffen zusätzlich zu den vorstehend erläuterten Sensoriken 4₁, 4₂, ..., 4ₙ eine fernaktivierbare Waffenverblockung vor, die eine Schussabgabe unterbinden kann, siehe die Figuren 5 und 6. Die Aktivierung einer derartigen Verblockung lässt sich entweder durch das Überschreiten starrer, vor der Benutzung der Schusswaffe in der Sensorauswerteelektronik vorgegebener Grenzen (besonders interessant für die Nutzung auf Standort-Schießanlagen und provisorischen Schießständen) oder in Folge der Auswertung von Gefährdungsbereichen und Positionsdaten vornehmen.

Für die technische Ausgestaltung einer aktivierbaren Schusswaffenblockadeeinrichtung sind die zwei Ausgestaltungsprinzipien denkbar:
1. eine Schussabgabe ist im Normalzustand verblockt und wird aktiv, beispielsweise per Kommando freigegeben.
2. eine Schussabgabe ist im Normalzustand möglich und wird aktiv, beispielsweise per Kommando unterbunden.

Eine Vorgabe starrer Schieß- und Sperrbereiche ist insbesondere bei der Nutzung des lösungsgemäßen Gefechtstrainingssystems auf Anlagen mit festgelegten Punktfeuerstellungen von Vorteil. Durch die Einschränkung von Schießbereichen können sowohl die Gefährdung von Personen, z.B. durch Rückpraller, als auch die Schädigung lokaler Infrastruktur signifikant reduziert werden.

Die Nutzung dynamischer Schieß- und Sperrbereiche bietet sich unter anderem für Gefechtsübungen an. Hierbei wird eine Schusswaffe im Fall einer erfassten Gefährdung von Personen, die sich beispielsweise im Gefährdungsbereich einer Waffe befinden, blockiert und an der Schussabgabe gehindert. Die Auswertung, ob zu einem Zeitpunkt eine Verletzung von Sicherheitsbereichen vorliegt, wird für alle Übungsteilnehmer zentral in der übergeordneten Informationsverarbeitungseinheit ausgeführt. In diesem Fall wird auch eine etwaige Schusswaffenverblockung seitens der Informationsverarbeitungseinheit zentral gesteuert und iniziiert. Alternativ kann eine Schusswaffenverblockung auch dezentral durch einen lokalen Abgleich von Positionen und Gefährdungsbereichen erfolgen. In diesem Fall tauschen sich die Schusswaffen untereinander über eine Schusswaffen-spezifische Kommunikationseinheit in Echtzeit aus. Ebenfalls ist eine gefährdungsabhängige Kombination aus den vorstehenden beiden Steuerungsmöglichkeiten denkbar.

In Figur 5a ist das vorstehende Szenario für starre Schieß- und Sperrbereiche dargestellt. In diesem Fall erfasst eine Sensorik 4 Position, Ausrichtung und Sicherungszustand der Schusswaffe. All diese Informationen werden der zentralen Informationsverarbeitungseinheit 3 übermittelt, in der eine Informationsauswertung erfolgt und fallabhängig eine Schusswaffenblockade iniziiert wird.

In Figur 5b ist ein Fallszenario für dynamische Schieß- und Sperrbereiche illustriert. In diesem Fall befinden sich n Schusswaffen innerhalb eines Übungsbereiches. Die Sensoriken 4₁, 4₂, ..., 4ₙ der einzelnen Schusswaffen ermitteln die Position, die Lage der Schusswaffe sowie auch den Sicherungszustand der jeweiligen Schusswaffe. Sämtliche erfassten Informationen werden zur zentralen Informationsverarbeitungseinheit 3 übermittelt, in der optional die Gesamtlage dargestellt wird, aber jedoch sämtliche Informationen unter Berücksichtigung entsprechender Gefährdungsbereiche ausgewertet werden, wonach fallabhängig eine Verblockung iniziiert wird. Die Verblockung erfolgt Schusswaffen-spezifisch, je nachdem welche der Schusswaffen einen nichterlaubten Gefährdungsbereich definiert.

Figur 6 zeigt in diesem Zusammenhang ein Blockdiagramm zur Illustration der Interaktion der Schusswaffenverblockung bei jeweils unterschiedlichen Fallkonstellationen.

Wie auch bei allen vorstehend erläuterten Ausführungsbeispielen zur Durchführung eines Gefechtstrainings sehen die Zielobjekte, auf die die Schützen die Schusswaffen ausrichten, eine Einheit zur Erfassung von Treffereignissen sowie der Position oder vorteilshaft auch zur Erfassung der räumlichen Ausrichtung vor, insbesondere in Fällen, in denen die Zielobjekte mobil sind. Auf diese Weise können der Status des Zielobjektes, eine zulässige Trefferfläche sowie deren räumliche Orientierung des Zielobjektes erfasst und in Form einer Zielobjektinformation an die zentrale Informationsverarbeitungseinheit übermittelt werden.

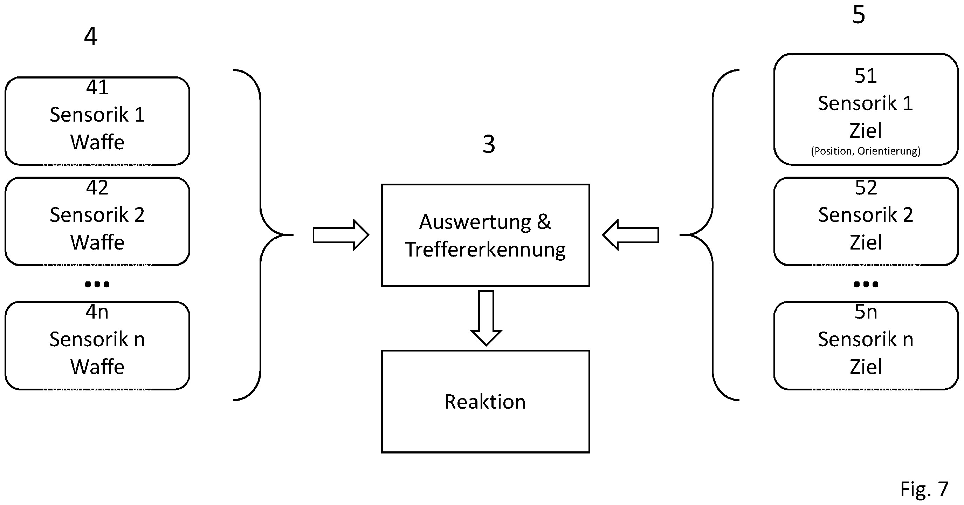

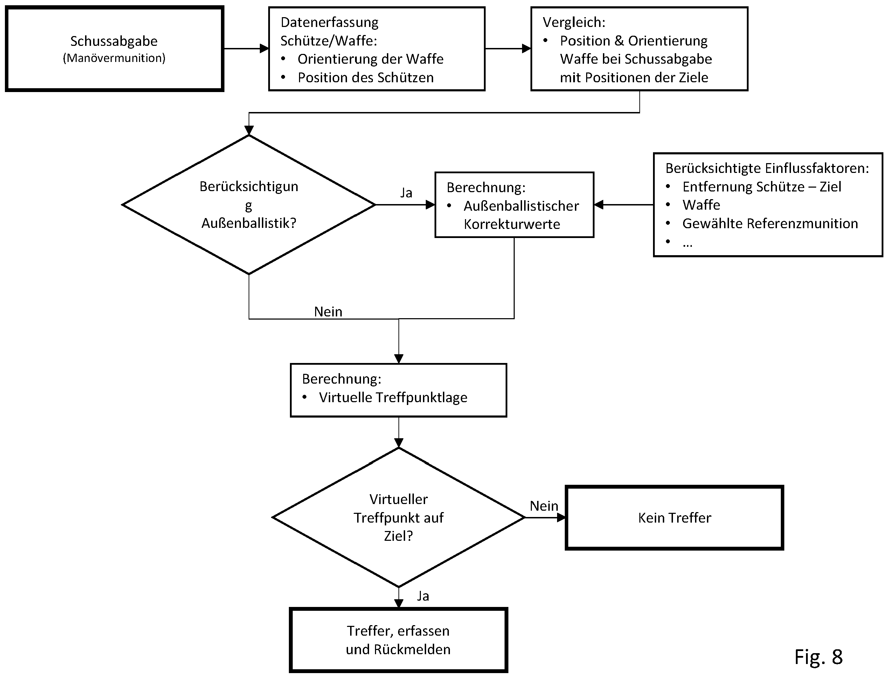

Hierzu zeigen die Figuren 7 und 8 einen Anwendungsfall bei dem simulierte Treffer am Zielobjekt erfassbar sind, d.h. die Schießübung wird mit Manövermunition, d.h. Platzpatronen, durchgeführt. Sämtliche an der Übung beteiligte Waffen verfügen über eine Sensorik 4₁, 4₂, ..., 4ₙ. Die Positions- und Ausrichtungserfassung jeder einzelnen Schusswaffe erfolgt, wie auch bei allen vorstehend genannten Anwendungsfällen, zeitsynchron.

Im Falle mobiler Zielobjekte verfügen die Zielobjekte ebenso über eine Sensorik 5₁, 5₂, ..., 5ₙ zur Erfassung von wenigstens der Position, vorzugsweise auch deren jeweilige Ausrichtung und diese ebenfalls zeitsynchronisiert mit allen an der Übung beteiligten Sensoriken.

Jede an der Übung beteiligte Schusswaffe sowie jedes Zielobjekt verfügt über eine Sensorik 4, 5, die allesamt eine gemeinsame präzise synchronisierte Zeitbasis besitzen und zudem in der Lage sind, ein eindeutiges, die jeweilige Komponente identifizierendes Identifikationsmerkmal zu generieren, das über eine jeweils an der Schusswaffe /Zielobjekt angebrachte Übertragungseinheit zur zentralen Informationsverarbeitungseinheit 3 übermittelt wird. Zum Zeitpunkt einer Schussabgabe werden durch die jeweilige Sensorik Zeitpunkt, Position und Ausrichtung einer Schusswaffe sowie ein zu treffendes Zielobjekt erfasst.

Gleichsam der Sensorik 4 in den n-Schusswaffen zur Erfassung von Position, Ausrichtung sowie auch Schussereignis verfügen die Zielobjekte auch über eine Sensorik 5, die die Position und optional auch die Ausrichtung des Zielobjektes sowie - eine Einheit zur Erfassung eines Ereignisses am Zielobjekt, beispielsweise ein Trefferereignis, zu erfassen und an die zentrale Informationsverarbeitungseinheit zu übertragen vermag. Sämtliche Sensoriken 4, 5 sind untereinander zeitsynchronisiert und vermögen zu Zwecken einer eindeutigen Komponentenidentifikation zusätzlich ein Identifikationsmerkmal an die Informationsverarbeitungseinheit zu übertragen.

Zum Zeitpunkt einer Schussabgabe wird sowohl der Zeitpunkt, die Position und Orientierung der jeweiligen Schusswaffe sowie auch das durch die Schusswaffe anvisierte Zielobjekt erfasst. Aus den erfassten Informationen und ihre zeitliche Korrelation wird in der zentralen Informationsverarbeitungseinheit ermittelt, ob das Zielobjekt getroffen wurde. Optional kann bei der Informationsauswertung und einer damit verbundenen Ermittlung der Schütze-Ziel-Zuordnung neben einem zeitlichen Korrelationskriterium ein ballistisches Modell zur Geschossbewegung einbezogen werden. Das entsprechende Zielobjekt kann entsprechend nach Feststellung eines Treffers gegebenenfalls ebenfalls, gesteuert durch die zentrale Informationsverarbeitungseinheit reagieren, beispielsweise durch Abklappen einer Klappfallscheibe am Zielobjekt.

Bei der Trefferauswertung können zudem unterschiedliche Störparameter, wie beispielsweise virtuelle Wettereinflüsse oder ein modifiziertes außenballistisches Verhalten virtueller Projektile berücksichtigt werden. Zudem ist die Einbeziehung von 3D-Geländedaten, beispielsweise die Verdeckung eines Zielobjektes durch Gebäude oder Geländetopologien, bei der Trefferauswertung möglich.

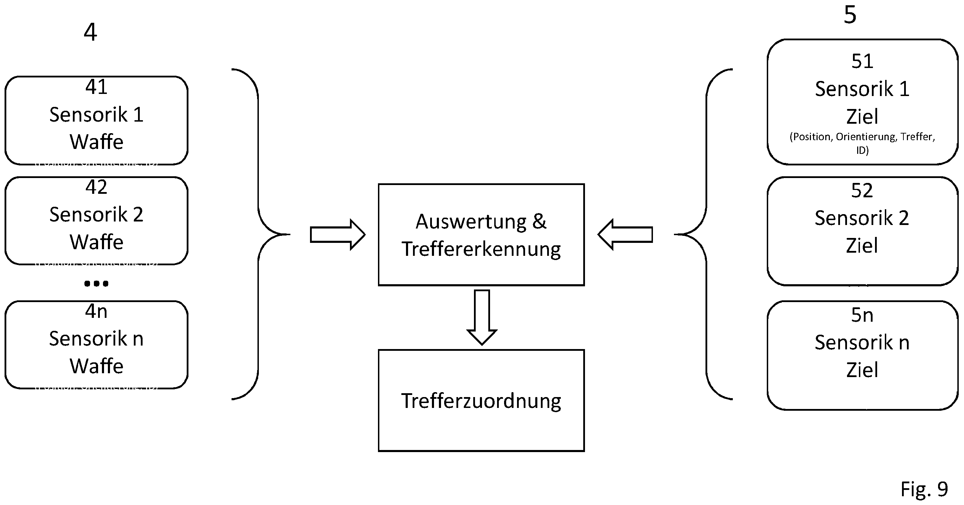

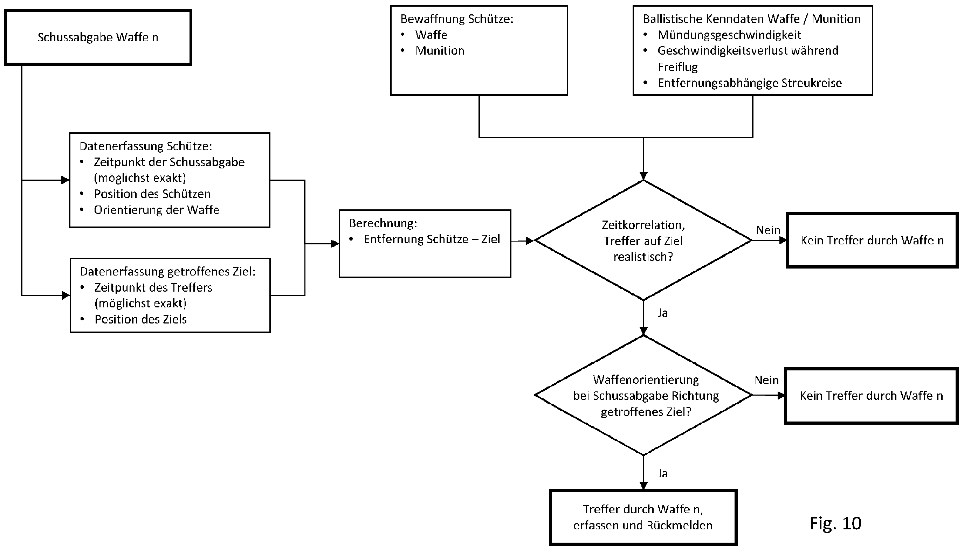

In einem weiteren, in den Figur 9 und 10 illustrierten Anwendungsfall sind die Schusswaffen jeweils mit der Sensorik 4₁, 4₂, ..., 4ₙ ausgestattet, die neben einer Positions- und Ausrichtungsbestimmung der Schusswaffe auch den Zeitpunkt einer Schussabgabe mit ausreichender Präzision, vorzugsweise im Millisekundenbereich, erfassen kann. Des Weiteren sind die zu bekämpfenden Zielobjekte mit einer Sensorik 5₁, 5₂, ..., 5ₙ ausgestattet, welche die Erfassung von Position und gegebenenfalls Ausrichtung des jeweiligen Zielobjektes ermöglicht und ein zeitlich präzise aufgelöstes Trefferereignis zu detektieren vermag und dieses mit einem entsprechenden Zeitstempel als Trefferinformation zusätzlich an die zentrale Informationsverarbeitungseinheit überträgt. Jede in der Übung mit Sensoriken 4, 5 ausgestatteten Komponenten verfügt über eine mit den übrigen Komponenten ausreichend genaue synchronisierte Zeitbasis sowie ein eindeutiges Identifikationsmerkmal, so dass zeitlich und örtliche Ereignisse, d.h. Schussabgaben und Treffer am Zielobjekt korreliert erfassbar sind. Diese Korrelation kann Modelle einbeziehen, z.B. eine außenballistische Beschreibung des Geschossfluges, um z.B. Flugzeiten und daraus abgeleitete Schussdistanzen zu berücksichtigen.

An der Schusswaffe wird der ausreichend präzise Zeitpunkt einer Schussabgabe erfasst, ebenso wird im Zielobjekt der ausreichend präzise Zeitpunkt eines Treffers erfasst. Basierend auf diesen Werten kann unter Berücksichtigung der Ausrichtung von Schusswaffe und Zielobjekt zueinander, der Distanz zwischen Waffe und Ziel sowie der außenballistischen Eigenschaften der eingesetzten Munition ermittelt werden, welche Schusswaffe mit hoher Wahrscheinlichkeit das entsprechende Zielobjekt getroffen hat. Das eindeutige Identifikationsmerkmal ermöglicht eine Waffen-spezifische Trefferzuordnung, die übungsbegleitend oder im Nachgang ausgewertet werden kann.

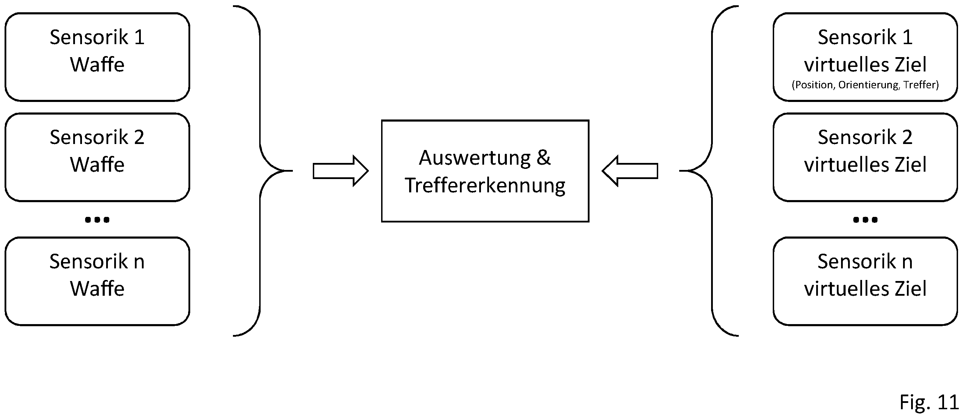

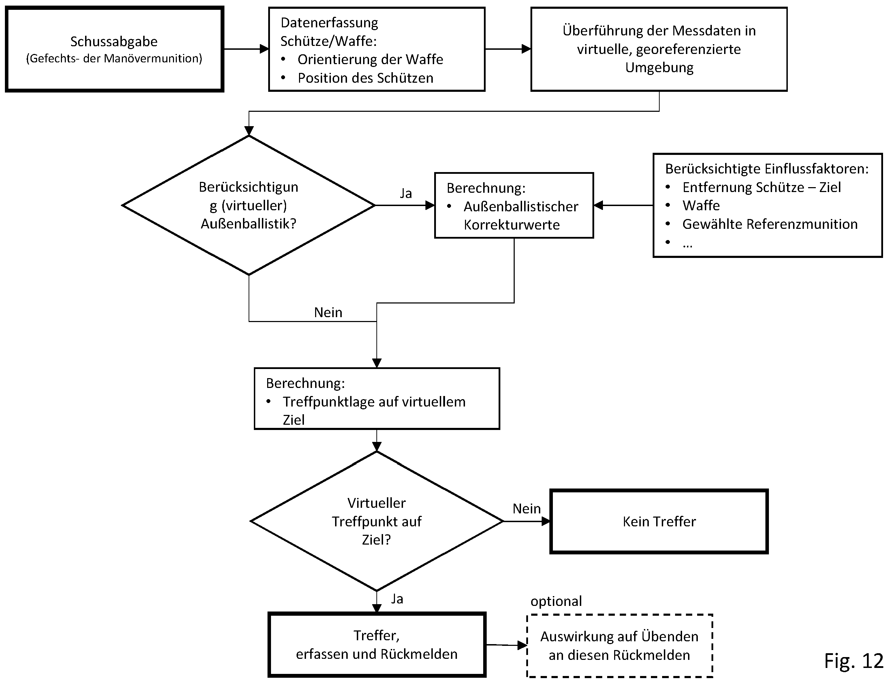

In einem weiteren, in den Figur 11 und 12 illustrierten Anwendungsfall werden Positionen, Orientierungen und Zeitpunkt der Schussabgabe der jeweils beteiligten Schusswaffen erfasst. Werden in das Übungsszenario virtuelle Ziele, beispielsweise über ein Augmented Reality System georeferenziert eingespielt, beispielsweise unter Verwendung von VR-Brillen, die die einzelnen Schützen tragen, so können diese mit den realen, mit der Sensorik ausgestatteten Schusswaffen bekämpft werden. Dabei ist es irrelevant, ob Manöver- oder scharfe Munition verwendet wird. Treffer auf derartige virtuelle Zielobjekte lassen sich auf Basis von Position und Orientierung der Schusswaffen und der virtuellen Position des Ziels berechnen. Dabei gilt es jedoch beispielsweise durch Verwendung einer dynamischen, situationsabhängigen Waffenverblockung sichergestellt werden, dass z.B. durch Waffenüberhöhung keine inakzeptablen Gefährdungen verursacht werden.

### Bezugszeichenliste

- 1: Sensoren
- 2: Datenaufbereitung
- 3: Informationsverarbeitungseinheit
- 4₁, 4₂, ..., 4ₙ: Sensorik an Schusswaffe
- 5₁, 5₂, ..., 5ₙ: Sensorik an Zielobjekt

## Patentansprüche

1. Gefechtstrainingssystem zur überwachten Durchführung von Schießübungen und/oder Gefechtsszenarien umfassend:
- wenigstens zwei Komponenten, von denen die erste Komponente eine Schusswaffe und die zweite Komponente ein Zielobjekt sind,
- eine Einrichtung zur Erfassung jeweils einer Positionsinformation der wenigstens zwei Komponenten,
- eine Einrichtung zur Erfassung einer räumlichen Ausrichtungsinformation zumindest für die wenigstens eine Schusswaffe unter den wenigstens zwei Komponenten, sowie
- eine Informationsverarbeitungseinheit (3), in der die Positionsinformation der wenigstens zwei Komponenten sowie die Ausrichtungsinformation der wenigstens einen Schusswaffe verarbeitbar und wenigstens in Form einer Ergebnisinformation transformierbar sind,
wobei die wenigstens zwei Komponenten jeweils eine Uhr aufweisen, die untereinander zeitsynchronisiert sind und jeweils codierte Zeitsignale mit einer die jeweilige Komponente individualisierenden Komponentenkennung erzeugen, und dass an den wenigstens zwei Komponenten jeweils ein Ereignissensor vorgesehen ist.

2. Gefechtstrainingssystem nach Anspruch 1,
**dadurch gekennzeichnet, dass** die Einrichtung zur Erfassung der Positionsinformation als integraler Bestandteil jeweils der wenigstens einen Schusswaffe unter den wenigstens zwei Komponenten ausgebildet ist.

3. Gefechtstrainingssystem nach Anspruch 2,
**dadurch gekennzeichnet, dass** die Einrichtung zur Erfassung der Positionsinformation eine Einheit zum Empfang und zur Auswertung von terrestrisch oder Satelliten- gestützter Positionssignale ist.

4. Gefechtstrainingssystem nach einem der Ansprüche 1 bis 3,
**dadurch gekennzeichnet, dass** die Einrichtung zur Erfassung der räumlichen Ausrichtungsinformation als integraler Bestandteil jeweils der wenigstens einen Schusswaffe unter den wenigstens zwei Komponenten ausgebildet ist.

5. Gefechtstrainingssystem nach Anspruch 4,
**dadurch gekennzeichnet, dass** die Einrichtung zur Erfassung der räumlichen Ausrichtungsinformation wenigstens eine der nachfolgenden Komponenten aufweist: inertiale Messeinheit (IMU), Magnetometer, Kamera, optischer Sensor, Ultraschallwandler, Bewegungsanalyse-Sensor, Ultra-Wideband-Ortungssystem.

6. Gefechtstrainingssystem nach Anspruch 1,
**dadurch gekennzeichnet, dass** die Einrichtung zur Erfassung der Positionsinformation als boden-, wasser- und/oder luftgestütztes Fernüberwachungssystem ausgebildet ist.

7. Gefechtstrainingssystem nach Anspruch 1,
**dadurch gekennzeichnet, dass** die Einrichtung zur Erfassung der räumlichen Ausrichtungsinformation als boden-, wasser- und/oder luftgestütztes Fernüberwachungssystem ausgebildet ist.

8. Gefechtstrainingssystem nach Anspruch 6 und 7,
**dadurch gekennzeichnet, dass** die Einrichtung zur Erfassung der Positionsinformation sowie die Einrichtung zur Erfassung der räumlichen Ausrichtungsinformation in Form wenigstens eines der nachfolgenden Systeme ausgebildet ist: Radarsystem, optisches Bild- und Mustererfassungssystem, Ultraschallwellenbasiertes entfernungsauflösbares Detektionssystem (SODAR), Lichtwellenbasiertes entfernungsauflösbares Detektionssystem (LIDAR), Motion Capture-System.

9. Gefechtstrainingssystem nach einem der Ansprüche 1 bis 8,
**dadurch gekennzeichnet, dass** die wenigstens zwei Komponenten jeweils eine Informations-Übertragungseinheit und/oder -Empfangseinheit umfassen.

10. Gefechtstrainingssystem nach einem der Ansprüche 1 bis 9,
**dadurch gekennzeichnet, dass** die wenigstens eine Schusswaffe unter den wenigstens zwei Komponenten eine Einheit zur Erfassung des Sicherungszustandes und Erzeugung einer Information über den Sicherungszustand der Schusswaffe besitzt.

11. Gefechtstrainingssystem nach einem der Ansprüche 1 bis 10,
**dadurch gekennzeichnet, dass** die wenigstens eine Schusswaffe unter den wenigstens zwei Komponenten eine fernaktivierbare Schusswaffenblockadeeinrichtung besitzt.

12. Gefechtstrainingssystem nach einem der Ansprüche 1 bis 11,
**dadurch gekennzeichnet, dass** der Ereignissensor in Form wenigstens eines der nachfolgenden Sensoren ausgebildet ist: Beschleunigungssensor, akustischer Sensor, Körperschallsensor, Deformationssensor, Berührungssensor.

13. Gefechtstrainingssystem nach einem der Ansprüche 1 bis 11,
**dadurch gekennzeichnet, dass** der Ereignissensor in Verbindung mit der Uhr Zeitcodierte Sensorsignale erzeugt.

14. Gefechtstrainingssystem nach einem der Ansprüche 1 bis 13,
**dadurch gekennzeichnet, dass** ein optisches Projektionssystem vorgesehen ist, das ein virtuelles Zielobjekt optisch wahrnehmbar zu erzeugen in der Lage ist.

15. Gefechtstrainingssystem nach Anspruch 14,
**dadurch gekennzeichnet, dass** das optische Projektionssystem eine VR-Brille und/oder eine räumlich positionierbare Projektionsfläche umfasst.

16. Gefechtstrainingssystem nach einem der Ansprüche 1 bis 15,
**dadurch gekennzeichnet, dass** die Informationsverarbeitungseinheit wenigstens eine der folgenden Komponenten umfasst:
- Empfangseinheit, zumindest zum Empfang der Positions- und Ausrichtungsinformationen,
- Rechnereinheit, zur Verarbeitung und Auswertung zumindest der empfangenen der Positions- und Ausrichtungsinformationen,
- Uhr mit einer eingeprägten Uhrzeit,
- Visualisierungseinheit zur Darstellung der Ergebnisinformationen sowie
- Sendeeinheit.

17. Gefechtstrainingssystem nach Anspruch 16,
**dadurch gekennzeichnet, dass** die der Uhr der Informationsverarbeitungseinheit eingeprägte Uhrzeit mit den an den Komponenten angebrachten Uhren zeitsynchronisiert ist.

## Claims

1. Combat training system conducting shooting practice and/or combat scenarios in a monitored manner, comprising:
- at least two components, of which the first component is a firearm and the second component is a target object,
- a device for sensing position information of each of the at least two components,
- a device for sensing spatial orientation information at least for the at least one firearm of the at least two components, and
- an information processing unit (3), in which the position information of the at least two components and the orientation information of the at least one firearm can be processes and transformed into the form of at least one item of result information, **wherein** the at least two components each have a clock, which clocks are time-synchronised with each other and each generates coded time signals with a component identifier which individualises the respective component, and that an event sensor is provided on each of the at least two components.

2. Combat training system according to Claim 1,
**characterized in that** the device for sensing the position information is embodied as an integral element of each of the at least one firearms among the at least two components.

3. Combat training system according to Claim 2,
**characterized in that** the device for sensing the position information is a unit for receiving and evaluating terrestrial or satellite-supported position signals.

4. Combat training system according to any one of Claims 1 to 3,
**characterized in that** the device for sensing the spatial orientation information is embodied as an integral element of each of the at least one firearms among the at least two components.

5. Combat training system according to Claim 4,
**characterized in that** the device for sensing the spatial orientation information includes at least one of the following components: Inertial Measurement Unit (IMU), magnetometer, camera, optical sensor, ultrasonic transducer, motion analysis sensor, ultra-wideband location system.

6. Combat training system according to Claim 1,
**characterized in that** the device for sensing the position information is embodied as a terrestrial, waterborne and/or airborne remote control system.

7. Combat training system according to Claim 1,
**characterized in that** the device for sensing the spatial orientation is embodied as a terrestrial, waterborne and/or airborne remote control system.

8. Combat training system according to Claims 6 and 7,
**characterized in that** the device for sensing the position information and the device for sensing the spatial orientation is embodied in the form of at least one of the following systems: radar system, optical image and pattern detection system, ultrasound wave based, range-resolving detection system (SODAR), lightwave-based range-resolving detection system (LIDAR), Motion Capture System.

9. Combat training system according to any one of Claims 1 to 8,
**characterized in that** the at least two components each comprise an information transmitting unit and/or receiving unit.

10. Combat training system according to any one of Claims 1 to 9,
**characterized in that** the at least one firearm of the at least two components has a unit for detecting the arm states and generating an information element regarding the arm state of the firearm.

11. Combat training system according to any one of Claims 1 to 10,
**characterized in that** the at least one firearm of the at least two components has a firearm disabling device which can be activated remotely.

12. Combat training system according to any one of Claims 1 to 11,
**characterized in that** the event sensor is embodied in the form of at least one of the following sensors: accelerometer, acoustic sensor, structure-borne sound sensor, deformation sensor, contact sensor.

13. Combat training system according to any one of Claims 1 to 11,
**characterized in that** the event sensor generates time-coded sensor signals in conjunction with the clock.

14. Combat training system according to any one of Claims 1 to 13,
**characterized in that** an optical projection system is provided, which is capable of generating a visually perceptible virtual target object.

15. Combat training system according to Claim 14,
**characterized in that** the optical projection system comprises VR glasses and/or a spatially positionable projection surface.

16. Combat training system according to any one of Claims 1 to 15, **characterized in that** the information processing unit comprises at least one of the following components:
- receiver unit, at least for receiving the position and orientation information,
- arithmetic unit, for processing and evaluating at least the received position and orientation information,
- clock with an imposed clock time,
- visualisation unit for displaying the result information, and
- transmitting unit.

17. Combat training system according to Claim 16,
**characterized in that** the clock time imposed on the clock of the information processing unit is time-synchronised with the clocks mounted on the components.

## Revendications

1. Système d'entraînement au combat pour l'exécution surveillée d'exercices de tir et/ou de scénarios de combat comprenant :
- au moins deux composants, dont le premier composant est une arme à feu et le deuxième composant est un objet cible,
- un dispositif de détection des informations de position pour chacun desdits au moins deux composants,
- un dispositif de détection des informations d'alignement spatial au moins pour ladite au moins une arme à feu parmi les au moins deux composants, et
- une unité de traitement de l'information (3), dans laquelle l'information de position d'au moins deux composants et les informations d'alignement de la ou des armes à feu peuvent être traités et transformés au moins sous la forme d'informations de résultat,
dans lequel les au moins deux composants présentent chacun une horloge, qui sont synchronisées temporellement l'une avec l'autre et génèrent chacun une heure codée des signaux avec un identifiant de composant qui individualise le composant respectif, et en ce qu'un capteur d'événement est prévu dans chacun des au moins deux composants.

2. Système d'entraînement au combat selon la revendication 1, **caractérisé en ce que** le dispositif de détection des informations de position est configuré comme partie intégrante d'au moins une arme à feu parmi les au moins deux composants.

3. Système d'entraînement au combat selon la revendication 2, **caractérisé en ce que** le dispositif de détection des informations de position est une unité permettant de recevoir et d'évaluer des signaux de position terrestres ou satellitaires.

4. Système d'entraînement au combat selon une des revendications 1 à 3, **caractérisé en ce que** le dispositif de détection des informations d'alignement spatial est conçu comme partie intégrante d'au moins une arme à feu parmi les au moins deux composants.

5. Système d'entraînement au combat selon la revendication 4, **caractérisé en ce que** le dispositif de détection des informations d'orientation spatiale présente au moins un des composants suivants :
une unité de mesure inertielle (IMU), un magnétomètre, une caméra, un capteur optique, un transducteur ultrasonique, un capteur d'analyse de mouvement, un système de positionnement ultra large bande.

6. Système d'entraînement au combat selon la revendication 1, **caractérisé en ce que** le dispositif de détection des informations de position est conçu comme un système de surveillance à distance terrestre, aquatique et/ou aérien.

7. Système d'entraînement au combat selon la revendication 1 **caractérisé en ce que** le dispositif de détection des informations d'alignement spatial est conçu comme un système de surveillance à distance terrestre, aquatique et/ou aérien.

8. Système d'entraînement au combat selon les revendications 6 et 7, **caractérisé en ce que** le dispositif de détection des informations de position et le dispositif de détection des informations d'alignement spatial sont conçus sous la forme d'au moins un des systèmes suivants : système radar, système optique de capture d'images et de motifs, système de détection (SODAR) résolvable à distance basé sur les ondes ultrasonores, système de détection résolvable à distance basé sur les ondes lumineuses (LIDAR), système de capture de mouvement.

9. Système d'entraînement au combat selon une des revendications 1 à 8, **caractérisé en ce que** les au moins deux composants comprennent chacun une unité d'émission et/ou de réception d'informations.

10. Système d'entraînement au combat selon une des revendications 1 à 9, **caractérisé en ce que** au moins une arme à feu parmi les au moins deux composants comporte une unité pour détecter l'état de sécurité et générer des informations relatives à l'état de sécurité de l'arme à feu.

11. Système d'entraînement au combat selon une des revendications 1 à 10, **caractérisé en ce que** la au moins une arme à feu parmi les au moins deux composants présente un dispositif de blocage d'arme à feu actionné à distance.

12. Système d'entraînement au combat selon une des revendications 1 à 11, **caractérisé en ce que** le capteur d'événements est conçu sous la forme d'au moins un des capteurs suivants : capteur d'accélération, capteur acoustique, capteur de bruit d'impact, capteur de déformation, détecteur tactile.

13. Système d'entraînement au combat selon une des revendications 1 à 11, **caractérisé en ce que** le capteur d'événements génère des signaux de capteur codés temporellement en conjonction avec l'horloge.

14. Système d'entraînement au combat selon une des revendications 1 à 13, **caractérisé en ce qu'**il est prévu un système de projection optique qui est capable de produire un objet cible virtuel d'une manière optiquement perceptible.

15. Système d'entraînement au combat selon la revendication 14, **caractérisé en ce que** le système de projection optique comprend des lunettes VR et/ou une surface de projection positionnable spatialement.

16. Système d'entraînement au combat selon une des revendications 1 à 15, **caractérisé en ce que** l'unité de traitement de l'information comprend au moins un des composants suivants :
- une unité de réception, au moins pour la réception des informations de position et d'alignement,
- une unité informatique pour traiter et évaluer au moins les informations de position et d'alignement reçues,
- une horloge avec l'heure en relief,
- une unité de visualisation pour afficher également les informations de résultats et
- une unité de transmission.

17. Système d'entraînement au combat selon la revendication 16, **caractérisé en ce que** l'heure en relief sur l'horloge de l'unité de traitement de l'information est synchronisée temporellement avec les horloges fixées aux composants.
